# EUROPEAN PATENT SPECIFICATION

(11) **EP 3 715 288 B1**
(45) Date of publication and mention of the grant of the patent: **15.07.2026**
(21) Application number: 20166221.0
(22) Date of filing: 27.03.2020
(51) Int. Cl.: B65G 19/08, B65G 19/16, F25D 21/06

(54) **CONVEYOR FOR REMOVING SNOW AND/OR ICE FROM A COOLING CHAMBER OF AN AIR COOLING OR AIR CONDITIONING MACHINE**
FÖRDERER ZUM ENTFERNEN VON SCHNEE UND/ODER EIS AUS EINER KÜHLKAMMER EINER LUFTKÜHL- ODER KLIMAMASCHINE
CONVOYEUR POUR L'ÉLIMINATION DE NEIGE ET/OU DE GLACE D'UNE CHAMBRE DE REFROIDISSEMENT D'UNE MACHINE DE REFROIDISSEMENT D'AIR OU DE CONDITIONNEMENT D'AIR

(30) Priority: 28.03.2019 CZ 20190188
(43) Date of publication of application: 30.09.2020
(73) Proprietor: Mirai Intex Sagl, 6830 Chiasso (CH)
(72) Inventor: Tsyplakov, Vladyslav, 1290 Versoix (CH)
(74) Representative: Musil, Dobroslav

(56) References cited:
- EP-A1- 3 674 616
- CN-A- 101 059 296
- DE-A1- 102016 116 924
- DE-A1- 2 700 481
- DE-A1- 2 807 883
- FR-A1- 2 334 925

## Description

### Technical field

The invention relates to an air cooling or air conditioning machine comprising a cooling chamber with a block valve for supplying and discharging air into and from the cooling chamber, which is connected via flanges to air ducts of the air cooling or conditioning machine, whereby the block valve is associated with a dehumidifier through which the air passes from the cooling chamber to the block valve, wherein a chain conveyor for removing snow and/or ice is mounted in an airtight manner with its part open from above to the lower part of the dehumidifier, the chain conveyor being mounted on a frame which is mounted in the cooling chamber and together with the conveyor passes through its wall into the space outside the cooling chamber.

### Background art

Various bulk material conveyors are known, for example RU 2130887, RU 2111913 or RU 2130886, but none of them is capable of operating at temperatures lower than -60 ° C and of conveying snow and/or ice out of the cooling chamber without freezing its interior. Another disadvantage of the known conveyors is that they are not airtight.

Furthermore, document DE 2700481 A1 discloses a conveyor for discharging chips for cutting machine tools, especially saws, with a roller chain whose two branches are arranged in a vertical plane above each other, and discharge vanes are arranged on one side of the chain perpendicularly to the vertical plane of the chain whereby the discharge vanes in the upper part of the conveyor extend into a chip discharge chute, into which chips fall from above and are then carried along the bottom of the discharge chute by the vanes, until they fall out next to the chain drive wheel through a chip ejection opening arranged in the front part of the conveyor. The housing of the chain is therefore open in this part. Arranged below the lower branch of the chain is a drain gutter which is formed by the bottom of the conveyor, through which the cooling liquid flows into a filter housing arranged on the rear part of the conveyor, which has a bottom made as a sieve on which a filter is placed. The housing of the conveyor is therefore open also in this part. The arrangement of the vanes next to the chain would not. Moreover, the conveyor is not designed to be airtight, both its front part and rear part are open and so it cannot be used in a closed circuit of a cooling machine. Both the branches of the chain of the conveyor are arranged in a vertical plane above each other.

CN 101059296A describes a conveyor transporting ice from a bucket in the lower part of the conveyor upwards to a mouth through which the ice is dropped off the conveyor. The chain of the conveyor is arranged in a vertical plane. Both the bucket 3 and the mouth 2 are open to the environment - that is why the conveyor is not airtight, and so it cannot be used in a closed circuit of a cooling machine. In addition, the conveyor contains two chains and sprockets, which are located on shafts mounted in bearings, which requires sealing. At temperatures below -60°C, the conveyor would be inoperative, as both bearings and seals would freeze.

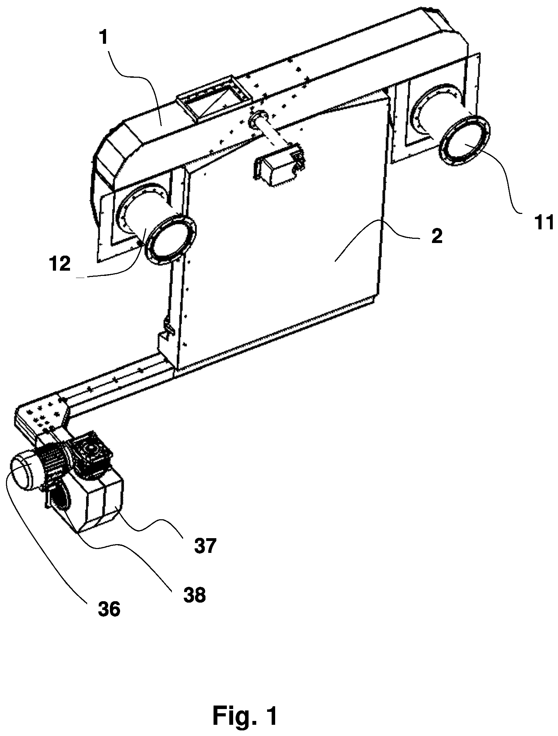

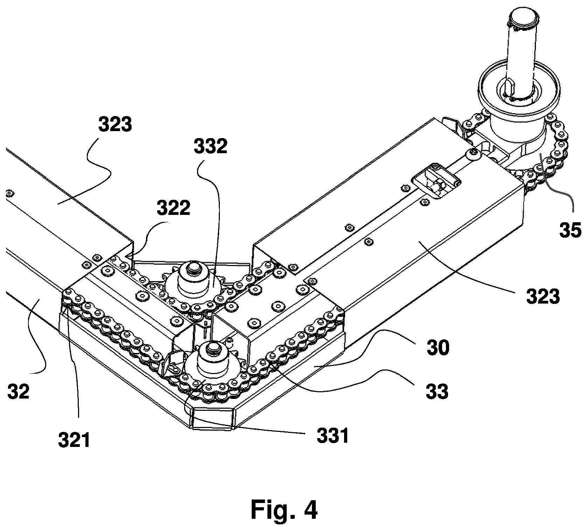

FR 2 334 925 A1 discloses a flake ice unloading device with a horizontal conveyor which extends along the full width of the device and is driven by a chain which passes over sprockets. Both the branches of the chain shown in Fig. 1 lie in a vertical plane above each other, as also shown in Figs. 4, 6 and 7. The conveyor is open to the surrounding space and therefore cannot be used in a closed circuit of a cooling machine.

The object of the invention is to provide a conveyor capable of operating at low temperatures, even below -60°C, and airtight from the outside of the cooling chamber.

### Principle of the invention

The object of the invention is achieved by an air cooling or air conditioning machine defined by claims 1 to 4.

### Description of the drawings

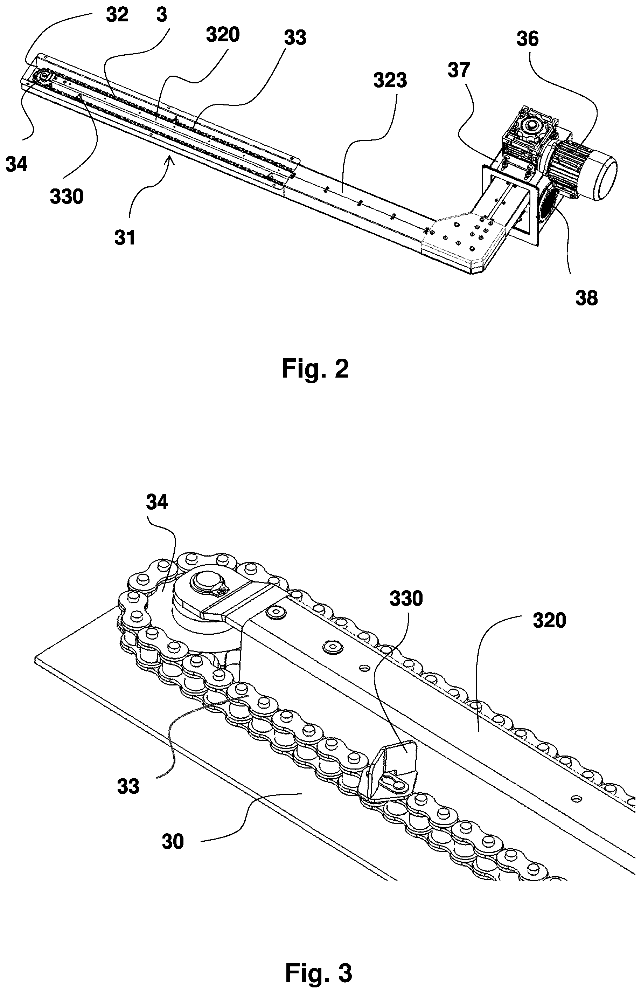

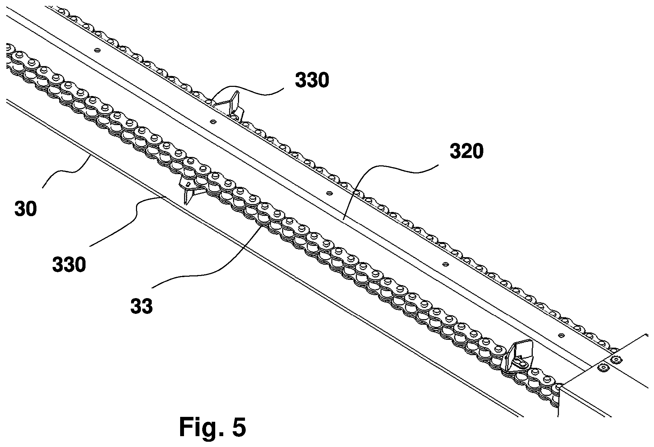

An exemplary embodiment of the chain conveyor of air cooling or air conditioning machine according to the invention is schematically represented in the enclosed drawings, wherein Fig. 1 is a view of a dehumidifier with a conveyor attached, Fig. 2 is a view of a conveyor without a dehumidifier, Fig. 3 shows a detail of a chain, Fig. 4 shows a detail of the angular part of the conveyor with a drive sprocket and Fig. 5 shows an arrangement of the vanes on both sides of the chain.

### Examples of embodiment

The air cooling or air conditioning machine according to the invention comprises a cooling chamber (not shown), in which a block valve **1** is provided for supplying and discharging air into and from the cooling chamber, which is connected via flanges **11**, **12** to unillustrated air ducts of the air cooling machine. The valve **1** is associated with a dehumidifier **2,** through which the air passes from the cooling chamber to the valve **1**. The chain conveyor 3 is connected to the lower part of the dehumidifier **2** with its part open from above, whereby the part open from above constitutes a snow and ice collector **31**. The chain conveyor **3** is mounted on a frame **30**, which is housed in the cooling chamber, passes through the wall thereof and has an outer part arranged outside the cooling chamber.

The chain conveyor **3** comprises a trough **32**, which is formed by side walls mounted on the side walls of the frame **30** and which is divided by a separating beam **320** into two grooves **321, 322,** a working groove **321** and a return groove 322, through which the chain **33** passes, on which transport vanes **330** are mounted, at least one of which is provided with cleaning elements for cleaning the internal space of the grooves **321, 322,** removing snow and/or ice, for example by means of small brushes arranged on the circumference of the transport vanes **330.** In the illustrated embodiment, the transport vanes **330** are arranged on either side of the chain **33**, i.e., up and down. In an example not according to the invention, the vanes are arranged on only one side of the chain **33**. The front part of the conveyor trough **32** below the dehumidifier **2** is open from above and constitutes a collector of snow and/or ice. The front part of the conveyor trough **32** is circumferentially provided with a flange, which is airtightly connected to the dehumidifier **2.** At the front end of the trough **32,** a gear sprocket **34** is rotatably mounted on the frame **30**, which is wrapped with the chain **33**. Outside the dehumidifier **2** on the upper part of the trough **32**, a cover **323** is mounted in an airtight manner and the trough with the cover is led out of the cooling chamber. In the space outside the cooling chamber, the chain **33** of the conveyor is wrapped around a drive sprocket **35**, which is rotatably mounted on the frame **30** and coupled to the drive **36**. The container **37** for snow and/or ice is arranged below the drive sprocket **35**. The drive **36** and the container **37** are mounted on the frame **30** and the side wall of the cooling chamber, or in another suitable manner.

Snow and/or ice is removed from the collection container **37** as needed, preferably allowed to dissolve, or dissolved by forced heating and the dissolved snow and ice flows to an associated waste pipe (not shown) which is connected to the flange provided on the container **37**.

During the operation of the machine, a pressure/vacuum is created in the cooling chamber **1**, which is compensated by suctioning air from the environment through the compensating valve **38**, which is in the embodiment shown arranged on the container **37** for snow and/or ice. In this arrangement, it is advantageous when the sucked air passes through the space of the cold chain conveyor **3** and, consequently, the air is cooled and at least part of the moisture is precipitated from it.

In the embodiment shown, in order to save space outside the cooling chamber, the chain conveyor **3** is bent by 90° so that it extends next to the wall of the cooling chamber. To bend the chain **33**, two auxiliary sprockets **331**, **332** are rotatably mounted on the frame **30**, one for each chain branch of the chain **33.**

Before or at the start of the defrosting of the dehumidifier **2,** the drive **36** of the chain conveyor **3** is started and the chain **33** begins to move. The de-iced snow and/or ice falls into the collector **31** of the snow and/or ice is captured by the transport vanes **330** of the chain **33** and entrained into the snow and ice container, from which the dissolved snow and ice flows into the waste pipe.

### Industrial applicability

The air cooling or air conditioning machine according to the invention is designed for removing snow and/or ice removed from a dehumidifier arranged in a cooling chamber of an air cooling machine at temperatures lower than -60 °C.

### List of references

- 1: block valve
- 11, 12: valve flanges
- 2: dehumidifier
- 3: chain conveyor
- 30: conveyor frame
- 31: snow and ice collector
- 32: trough
- 320: separating beam
- 321: working groove of the trough
- 322: return groove of the trough
- 323: cover
- 33: chain
- 330: transport vanes of the chain
- 331: auxiliary sprocket of the working branch of the chain
- 332: auxiliary sprocket of return branch of the chain
- 34: gear sprocket
- 35: drive sprocket
- 36: drive of the conveyor
- 37: container for snow and ice
- 38: compensating valve

## Claims

1. An air cooling or air conditioning machine comprising a cooling chamber with a block valve (1) for supplying and discharging air into and from the cooling chamber, which is connected via flanges (11, 12) to air ducts of the air cooling or air conditioning machine, whereby the block valve (1) is associated with a dehumidifier (2), through which air passes from the cooling chamber to the block valve (1), and further comprises a chain conveyor (3) for removing snow and/or ice, the chain conveyor (3) also comprising a conveyor trough (32), wherein to the lower part of the dehumidifier (2) is mounted a front part, which is open from above, of the conveyor trough (32) which is circumferentially provided with a flange which is airtightly connected to the dehumidifier (2) the chain conveyor (3) is mounted on a frame (30) which is housed in the cooling chamber, passes through the wall thereof and has an outer part arranged outside the cooling chamber, wherein the conveyor trough (32) is formed by side walls mounted on the side walls of the frame (30) and the conveyor trough (32) is divided by a separating beam (320) into two grooves (321, 322), a working groove (321) and a return groove (322), through which the chain (33) passes, wherein transport vanes (330) are mounted on the chain (33) in the direction upwards and/or downwards, at least one of which is provided with cleaning elements for cleaning the interior of the grooves from snow and/or ice, wherein in the space outside the cooling chamber, the chain (33) of the conveyor is wrapped around a drive sprocket (35) which is rotatably mounted on the frame (30) and coupled to a drive (36) also mounted on the frame (30), wherein a container (37) for snow and/or ice is also mounted on the frame below the drive sprocket (35) whereby at the front end of the trough (32) the chain is wrapped around a gear sprocket (34) which is rotatably mounted on the frame (30), and the drive (36) and the container (37) for snow and ice are mounted on the frame (30) and the side wall of the cooling chamber.

2. An air cooling or air conditioning machine according to claim 1, **characterized in that** the conveyor (3) is bent by 90° in the space outside the cooling chamber, wherein to bend the chain (33) two auxiliary sprockets (331, 332), each for one branch of the chain, are rotatably mounted on the frame (30).

3. An air cooling or air conditioning machine according to any of the preceding claims, **characterized in that** the cleaning elements on the transport vanes (330) are formed by brushes arranged on the circumference of the transport vanes (330).

4. An air cooling or air conditioning machine according to any of the preceding claims, **characterized in that** a compensating valve (38) is mounted on the container (37) for snow and ice.

## Patentansprüche

1. Luftkühler oder Klimaanlage, die eine Kühlkammer mit einem Trennventil (1) zur Zufuhr und Abfuhr von Luft in und aus der Kühlkammer aufweist, das mittels Flanschen (11, 12) an eine Luftleitung der Kühl- oder Klimaanlage angeschlossen ist, wobei dem Trennventil (1) ein Entfeuchter (2) zugeordnet ist, über den die Luft aus der Kühlkammer ins Trennventil (1) strömt und ferner einen Kettenförderer (3) zum Abtransport von Schnee und/oder Eis aufweist, wobei der Kettenförderer (3) auch eine Förderrinne/einen Trog (32) aufweist, wobei an den unteren Teil des Entfeuchters (2) der vordere Teil der Förderrinne (32) montiert ist, der oben offen ist und am Umfang einen Flansch aufweist, der an den Entfeuchter (2) luftdicht angeschlossen ist, der Kettenförderer (3) an einem Rahmen (30) gelagert ist, der sich in der Kühlkammer befindet und deren Wand durchdringt und dessen äußerer Teil außerhalb der Kühlkammer liegt, wobei die Förderrinne (32) durch die Seitenwände gebildet wird, die an den Seitenwänden des Rahmens (30) gelagert sind und die Förderrinne (32) durch einen Trennbalken (320) in zwei Nuten (321, 322), eine Arbeitsnut (321) und eine Rücklaufnut (322) unterteilt ist, durch die die Kette (33) durchgeht, wobei an der Kette (33) die Förderschaufeln (330) in Auf- und/oder Abwärtsrichtung gelagert sind, von denen mindestens eine Reinigungselemente aufweist, um den Innenraum der Nuten (321, 322) von Schnee und/oder Eis zu reinigen und unterhalb des Antriebskettenrades (35) am Rahmen (30) ein Behälter (37) für Schnee und Eis gelagert ist, wobei außerhalb der Kühlkammer die Kette (33) des Förderers um das Antriebskettenrad (35) gewickelt ist, das am Rahmen (30) drehbar gelagert und mit dem ebenfalls am Rahmen (30) gelagerten Antrieb (36) verbunden ist, wobei der Behälter (37) für Schnee und/oder Eis ebenfalls am Rahmen unterhalb des Antriebskettenrades (35) gelagert ist, wobei am vorderen Ende der Förderrinne (32) die Kette um ein Zahnrad (34) geführt wird, das am Rahmen (30) drehbar gelagert ist, und der Antrieb (36) sowie der Behälter (37) für Schnee und Eis am Rahmen (30) und an der Seitenwand der Kühlkammer montiert sind.

2. Kettenförderer nach dem Anspruch 1, **dadurch gekennzeichnet, dass** der Förderer (3) außerhalb der Kühlkammer um 90° gebogen ist, wobei zum Biegen der Kette (33) am Rahmen (30) zwei Hilfskettenräder (331, 332) jeweils eines für einen Kettenarm drehbar gelagert sind.

3. Kettenförderer nach einem der vorangehenden Ansprüche, **dadurch gekennzeichnet, dass** die Reinigungselemente an den Förderschaufeln (330) durch Bürstenelemente gebildet werden, die am Umfang der Förderschaufeln (330) angeordnet sind.

4. Kettenförderer nach einem der vorangehenden Ansprüche, **dadurch gekennzeichnet, dass** ein Ausgleichsventil (38) auf dem Behälter (37) für Schnee und Eis gelagert ist.

## Revendications

1. Machine de refroidissement ou de climatisation à air comprenant une chambre de refroidissement avec une vanne de séparation (1) pour l'admission et l'évacuation de l'air vers et depuis la chambre de refroidissement, qui est raccordée à l'aide de brides (11, 12) à la conduite d'air de la machine de refroidissement ou de climatisation, tandis que la vanne de séparation (1) est associée à un déshumidificateur (2) à travers lequel l'air passe de la chambre de refroidissement vers la vanne de séparation (1), et comprenant en outre un convoyeur à chaîne (3) pour l'évacuation de la neige et/ou de la glace, tandis que le convoyeur à chaîne (3) comprend également une goulotte de transport (32), tandis que sur la partie inférieure du déshumidificateur (2) est montée la partie avant de la goulotte de transport (32) qui est ouverte vers le haut et pourvue sur sa périphérie d'une bride raccordée de manière étanche à l'air au déshumidificateur (2), le convoyeur à chaîne (3) est disposé sur un châssis (30) qui est placé dans la chambre de refroidissement, traverse la paroi de celle-ci et dont la partie extérieure est disposée à l'extérieur de la chambre de refroidissement, tandis que la goulotte (32) est formée par des parois latérales disposées sur les parois latérales du châssis (30) et la goulotte de transport (32) est divisée en deux rainures (321, 322) par une poutre de séparation (320), une rainure de travail (321) et une rainure de retour (322), dans lesquelles passe la chaîne (33), tandis que des pales de transport (330) sont disposées sur la chaîne (33) dans le sens ascendant et/ou descendant, dont au moins une est équipée d'éléments de nettoyage destinés à nettoyer la partie intérieure des rainures (321, 322) de la neige et/ou de la glace, et sous la roue dentée d'entraînement (35), un bac (37) à neige et à glace est disposé sur le châssis (30), tandis que la chaîne (33) du convoyeur est enroulée, à l'extérieur de la chambre de refroidissement, autour de la roue dentée d'entraînement (35), qui est disposée de manière pivotante sur le châssis (30) et reliée à un entraînement (36) également disposé sur le châssis (30), tandis que le bac (37) à neige et/ou la glace est également disposé sur le châssis sous la roue dentée d'entraînement (35), tandis que la chaîne est enroulée, à l'extrémité avant de la goulotte (32), autour d'un pignon (34) monté de manière pivotante sur le châssis (30), et l'entraînement (36) ainsi que le bac (37) à neige et à glace sont montés sur le châssis (30) et sur la paroi latérale de la chambre de refroidissement.

2. Convoyeur à chaîne selon la revendication 1, **caractérisé en ce que** le convoyeur (3) est courbé à 90° dans l'espace situé à l'extérieur de la chambre de refroidissement, tandis que deux roues dentées auxiliaires (331, 332) sont disposées de manière pivotante sur le châssis (30) pour la courbure de la chaîne (33), chacune pour une branche de la chaîne.

3. Convoyeur à chaîne selon l'une des revendications précédentes, **caractérisé en ce que** les éléments de nettoyage sur les pales de transport (330) sont constitués de petites brosses disposées sur la périphérie des pales de transport (330).

4. Convoyeur à chaîne selon l'une des revendications précédentes, **caractérisé en ce qu'**une vanne d'équilibrage (38) est disposée sur le bac (37) à neige et à glace.
